# EUROPEAN PATENT APPLICATION

(11) **EP 1 244 008 A1**
(43) Date of publication of application: **25.09.2002**
(21) Application number: 01106897.0
(22) Date of filing: 20.03.2001
(51) Int. Cl.: G06F 9/44

(54) **Method, computer program, and computer for automatically selecting application services for communicating data from a server to a client depending on the type of the client device**

(71) Applicant: SAP Aktiengesellschaft, 69190 Walldorf (DE)
(72) Inventor: Drittler, Bernhard, 69190 Walldorf (DE); Heymann, Jürgen, 69123 Heidelberg (DE); Kusterer, Stefan, 69226 Nussloch (DE)

(57) **Abstract**

A client computer (901/902) and a server computer (900) communicate via a network (990); the server computer receives user identification (1000) via the client computer that is selectively a first device (901) or a second device (902). The server computer (900) stores at least first and second application services (201, 202) for a single predetermined application class (200), wherein the first and second application services are adapted to client computer type. Upon receiving user identification, the server computer (900) further receives a device attribute (301/302) from the client computer (901/902), compares the device attribute (301/302) with reference attributes (401, 402), and selectively sends a representation of the first application service (201) or of the second application service (202) to the client computer (901/902) according to the device attribute (301/302).

## Description

### Background of the Invention

In distributed computer systems with networking computers, human users often use front-end computers to call application services from a remote computer. Usually, both computers are client-server related, with the front-end computer being the client computer and the remote computer being the server computer.

After the user has identified himself or herself to the client computer, it communicates the user identification to the server computer, and the server computer returns data to the client computer.

While the server computer often requires a user interface with keyboard and display only for administrating, such an interface is crucial for user of the front-end computer. However, front-end computers can be implemented by a variety of devices, such as for example, desktop computers, notebook or palm size computers, mobile phones, or the like. The user may switch between devices, but the data from the server computer might fit the device properties of the front-end only partly or might not fit at all.

Hence, there is an ongoing need to provide improved method, computer program and computer that alleviate these and other problems.

### Summary of the Invention

As in claim 1, the present invention relates to a communication method for a client computer and a server computer that communicate via a network. The server computer receives user identification via the client computer. The client computer selectively is a first device or a second device. The method is characterized by the following steps: storing in the server computer for a single predetermined application class, and for the client computer, at least a first application service and a second application service; upon receiving the user identification by the server computer, further receiving a device attribute from the client computer; and selectively sending a representation of the first application service or of the second application service from the server computer to the client computer according to the device attribute.

Among other advantages, the client computer user is relieved from specifying the device type, from selecting the device appropriate application service.

As in claim 2, preferably, sending comprises to compare the device attribute with reference attributes. This is a convenient feature that simplifies the operation of the server computer.

As in claim 3, preferably, the method further comprises to selectively execute the application service for that a representation has been sent.

As in claim 4, preferably, the execution depends on receiving a service request from the client computer. As in claims 3-4, with other words, executing the application is not necessary, the user can decide whether to have it executed or not.

As in claim 5, preferably, first and second application services provide different data for different visual presentations in the client computer. As an advantage of the present invention, the server computer has already prepared different visualizations. This prevents to transfer non-displayed data via the network.

As in claim 6, preferably, the server computer can receives the device attribute through evaluating of physical signal transfer parameters in the network. In other words, transmitting a dedicated device identifier is not required, the network already indicates the device type.

As in claim 7, preferably, in a first assignment, the reference attributes are selectively assigned to the first application service or to the second application service, and the first assignment is stored in a predefined first assignment table.

As in claim 8, preferably, in a second assignment, a reference user identification is assigned to a role; in a third assignment the predetermined application class is assigned to the role; upon receiving the user identification, the role and the application class are selected according to the second and third assignments, respectively. As in claims 7-8, assignment and roles are combined to the present invention. Reference attribute are distinct for different roles.

Further advantages are cited in the detailed specification. Without repeating the advantages, the present invention is summarized as follows:

As in claim 9, the present invention also relates to a server computer adapted to communicate with a client computer via a network. The server computer receives user identification via the client computer, the client computer selectively is a first device or a second device. The server computer characterized by storing for a single predetermined application class, and for the client computer, at least a first application service and a second application service, upon receiving the user identification, further receiving a device attribute from the client computer, and selectively sending a representation of the first application service or the second application service to the client computer according to the device attribute.

As in claim 10, preferably, the server computer compares the device attribute with reference attributes to select the application service for sending.

As in claim 11, preferably, the server computer selectively executes the selected application service.

As in claim 12, preferably, the server computer executes depending on receiving a service request from the client computer or not.

As in claim 13, preferably, the server receives the device attribute through a tag attached to a message that the client computer communicates to the server computer.

As in claim 14, preferably, the message is a unified resource locator (URL).

As in claim 15, preferably, the server computer has first and second application services that provide different data for different visual presentations in the client computer depending on the device of the client computer.

As in claim 16, preferably, the service computer receives device attributes that describe properties of an output device of the client computer.

As in claim 17, preferably, the server computer receives device attribute that are type identifiers of the client computer.

As in claim 18, preferably, the server computer receives the device attribute through evaluating physical signal transfer parameters in the network.

As in claim 19, preferably, in a first assignment, the server computer stores the reference attributes that are selectively assigned to the first application service or to the second application service.

As in claim 20, preferably, the server computer stores the first assignment in a predefined first assignment table.

As in claim 21, preferably, in a second assignment, a reference user identification is assigned to a role; in a third assignment the predetermined application class is assigned to the role; upon receiving the user identification, the role and the application class are selected according to the second and third assignments, respectively.

As in claim 22, the present invention also relates to a computer program product (CPP) with program instructions for a processor in a server computer adapted to communicate with a client computer via a network. The server computer receiving a user identification via the client computer, and the client computer selectively is a first device or a second device. The CPP causes the server computer to execute the following:
storing for a single predetermined application class, and for the client computer, at least a first application service and a second application service; upon receiving the user identification, further receiving a device attribute from the client computer; and
selectively sending a representation of the first application service or the second application service ) to the client computer according to the device attribute.

As in claim 23, preferably, the program instructions further cause the server computer to compare the device attribute with reference attributes.

As in claim 24, preferably, the program instructions further cause the server computer to selectively execute the application service.

As in claim 25, preferably, the program instructions further cause the server computer to execute the application service depending on the reception of a service request from the client computer.

As in claim 26, preferably, the program instructions further cause the server computer to receive the device attribute through a tag attached to a message that the client computer communicates to the server computer.

As in claim 27, preferably, the program instructions further cause the server computer, while performing the first and second application services, to provide different data for different visual presentations in the client computer.

As in claim 28, preferably, the program instructions further cause the server computer to selectively assign in a first assignment the reference attributes to the first application service or to the second application service.

As in claim 29, preferably, the program instructions further cause the server computer to store the first assignment in a predefined first assignment table.

As in claim 30, preferably, the program instructions further cause the server computer to assign a reference user identification to a role in a second assignment, and to assign the predetermined application class to the role in a third assignment, and, upon receiving the user identification, to select the role and the application class according to the second and third assignments, respectively.

As in claim 31 the present invention also relates to an article of manufacture with a computer usable medium having computer readable program instructions embodied therein for communicating between a client computer and a server computer over a network. The server computer receives user identification via the client computer, and the client computer is selectively a first device or a second device. The program instructions causing the server computer to execute the following: storing for a single predetermined application class, and for the client computer, at least a first application service and a second application service; upon receiving the user identification, further receiving a device attribute from the client computer; and selectively sending a representation of the first application service or the second application service to the client computer according to the device attribute.

As in claim 32, the present invention also relates to a signal that embodies computer readable program instructions for communicating between a client computer and a server computer over a network. The server computer receives user identification via the client computer; the client computer is selectively a first device or a second device, the program instructions causing the server computer to execute the following: storing for a single predetermined application class, and for the client computer, at least a first application service and a second application service; upon receiving the user identification, further receiving a device attribute from the client computer; and selectively sending a representation of the first application service or the second application service to the client computer according to the device attribute.

### Brief Description of the Drawings

- FIG. 1: illustrates a simplified block diagram of an inventive computer system having a plurality of computers;
- FIG. 2: illustrates a simplified block diagram of the computer system of FIG. 1 with more detail;
- FIG. 3: illustrates a computer program product (CPP) of the present invention by a simplified memory diagram;
- FIG. 4: illustrates an optional embodiment of the computer program of FIG. 3; and
- FIG. 5: illustrates a simplified method flow chart diagram of the method of the invention.

### Detailed Description of the present Invention

The present invention provides more user-friendly operation of the front-end computer by modifying the operation of the server computer. Technically, this is provided by communicating a front-end device identifier to the server computer and by selecting the appropriate application service on the server computer.

Disregarding the type of the front-end device, the user generally specifies a class of the service, and the server automatically selects the service most suitable for the particular front-end. Invisible to the user, the server dynamically updates the service selection according to a comparison between a device attribute and a reference attribute.

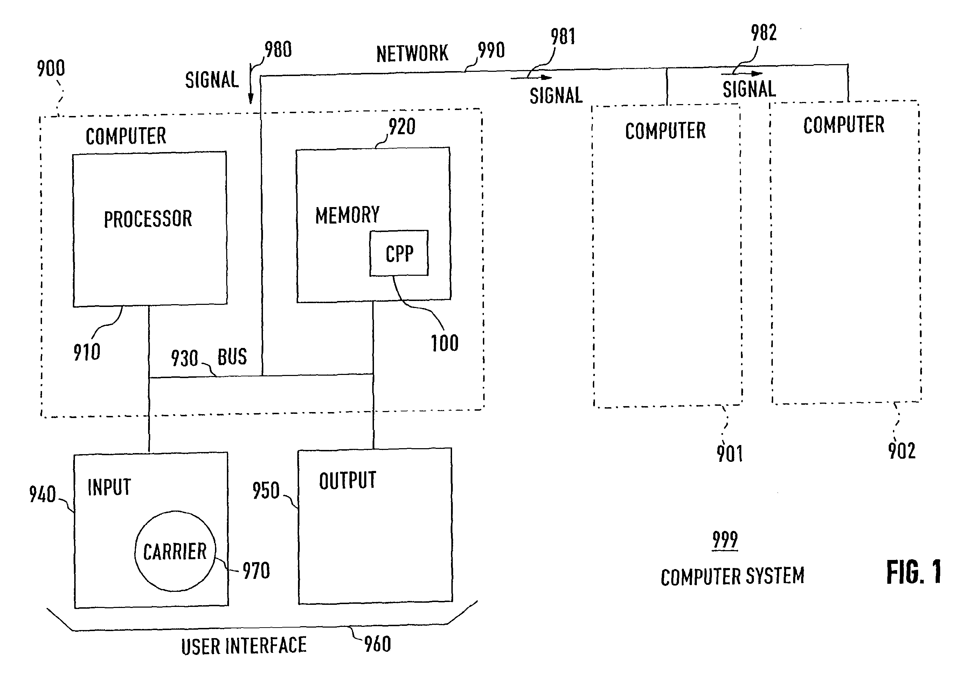

FIG. 1 illustrates a simplified block diagram of computer network system 999 having a plurality of computers 900, 901, 901 (or 90q, with q=0...Q-1, Q any number).

Computers 900-902 are coupled via inter-computer network 990. Computer 900 comprises processor 910, memory 920, bus 930, and, optionally, input device 940 and output device 950 (I/O devices, user interface 960). As illustrated, the invention is present by computer program product 100 (CPP), program carrier 970 and program signal 980, collectively "program".

In respect to computer 900, computer 901/902 is sometimes referred to as "remote computer", computer 901/902 is, for example, a server, a router, a peer device or other common network node, and typically comprises many or all of the elements described relative to computer 900. Hence, elements 100 and 910-980 in computer 900 collectively illustrate also corresponding elements 10q and 91q-98q (shown for q=0) in computers 90q.

Computer 900 is, for example, a conventional personal computer (PC), a desktop and hand-held device, a multiprocessor computer, a pen computer, a microprocessor-based or programmable consumer electronics, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 symbolizes elements that temporarily or permanently store data and instructions. Although memory 920 is conveniently illustrated as part of computer 900, memory function can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, such as, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick, or by any other media, like paper.

Optionally, memory 920 is distributed across different media. Portions of memory 920 can be removable or non-removable. For reading from media and for writing in media, computer 900 uses devices well known in the art such as, for example, disk drives, tape drives.

Memory 920 stores support modules such as, for example, a basic input output system (BIOS), an operating system (OS), a program library, a compiler, an interpreter, and a text-processing tool. Support modules are commercially available and can be installed on computer 900 by those of skill in the art. For simplicity, these modules are not illustrated.

CPP 100 comprises program instructions and - optionally - data that cause processor 910 to execute method steps of the present invention. Method steps are explained with more detail below. In other words, CPP 100 defines the operation of computer 900 and its interaction in system network system 999. For example and without the intention to be limiting, CPP 100 can be available as source code in any programming language, and as object code ("binary code") in a compiled form. Persons of skill in the art can use CPP 100 in connection with any of the above support modules (e.g., compiler, interpreter, operating system).

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture comprising a computer readable medium having computer readable program code means embodied therein for executing the method of the present invention. Further, program signal 980 can also embody computer program 100. Signal 980 travels on network 990 to computer 900.

Having described CPP 100, program carrier 970, and program signal 980 in connection with computer 900 is convenient. Optionally, program carrier 971/972 (not shown) and program signal 981/982 embody computer program product (CPP) 101/102 to be executed by processor 911/912 (not shown) in computers 901/902, respectively.

Input device 940 symbolizes a device that provides data and instructions for processing by computer 900. For example, device 940 is a keyboard, a pointing device (e.g., mouse, trackball, cursor direction keys), microphone, joystick, game pad, scanner. Although the examples are devices with human interaction, device 940 can also operate without human interaction, such as, a wireless receiver (e.g., with satellite dish or terrestrial antenna), a sensor (e.g., a thermometer), a counter (e.g., goods counter in a factory). Input device 940 can serve to read carrier 970.

Output device 950 symbolizes a device that presents instructions and data that have been processed. For example, a monitor or other type of display, (cathode ray tube (CRT), flat panel display, liquid crystal display (LCD), a speaker, a printer, a plotter, a vibration alert device. Similar as above, output device 950 communicates with the user, but it can also communicate with further computers.

Input device 940 and output device 950 can be combined to a single device; any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Devices 940 and 950 are coupled to computer 900 by bus 930 (as illustrated) or by network 990 (optional). While the signals inside computer 900 are mostly electrical signals, the signals in network are electrical, magnetic, optical or wireless (radio) signals.

Networking environments (as network 990) are commonplace in offices, enterprise-wide computer networks, intranets and the Internet (i.e. world wide web). The physical distance between a remote computer and computer 900 is not important. Network 990 can be a wired or a wireless network. To name a few network implementations, network 990 is, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

Transmission protocols and data formats are know, for example, as transmission control protocol/internet protocol (TCP/IP), hyper text transfer protocol (HTTP), secure HTTP, wireless application protocol, unique resource locator (URL), a unique resource identifier (URI), hyper text markup language HTML, extensible markup language (XML), extensible hyper text markup language (XHTML), wireless application markup language (WML), etc.

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

Computer and program are closely related. As used hereinafter, phrases, such as "the computer provides" and "the program provides", are convenient abbreviation to express actions by a computer that is controlled by a program.

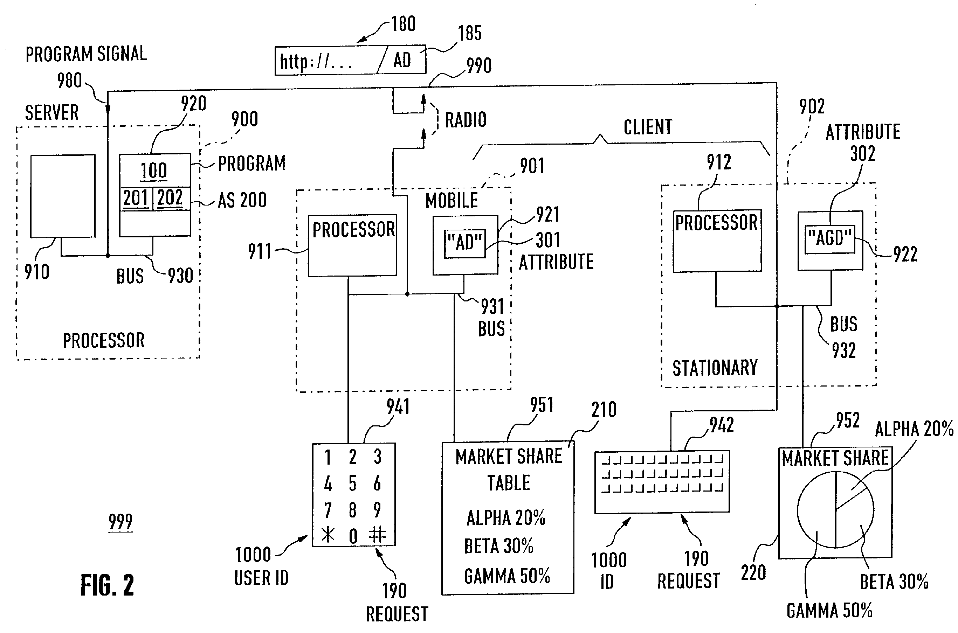

FIG. 2 illustrates a simplified block diagram of computer system 999 with first computer 900 ("server computer", "server") and second computer 901/902 ("client computer", "client") by way of example. Computer 900 operates according to method and program of the present invention; computer 901/902 is selectively first device 901 or second device 902. As used herein, a forward slash / indicates that, preferably, only one computer may be present. Reflecting the interaction with the user, computer 901/902 is also referred to as "front-end computer".

Server 900 is adapted to communicate with client 901/902 via a network 990. First device 901 is, for example, a mobile computer ("MOBILE") with phone keyboard 941 (input) and LCD-display 951 (output); network 990 thereby partly comprises a wireless link, such as a radio link ("RADIO"). Second device 902 is, for example, a stationary computer ("STATIONARY") with desktop keyboard 942 (input) and desktop display 952 (output).

As illustrated by arrow symbols, the user inputs user identification 1000 ("USER ID") and - optionally service request 190 ("REQUEST") via input 941/942. The user interface is illustrated in operation: LCD-display 951 shows presentation 210, in the example, a table titled "MARKET SHARE" with "ALPHA 20 %", "BETA 30 %", and "GAMMA 50 %". Desktop display 952 shows presentation 220, in the example, the same data "MARKET SHARE" in form of a pie chart.

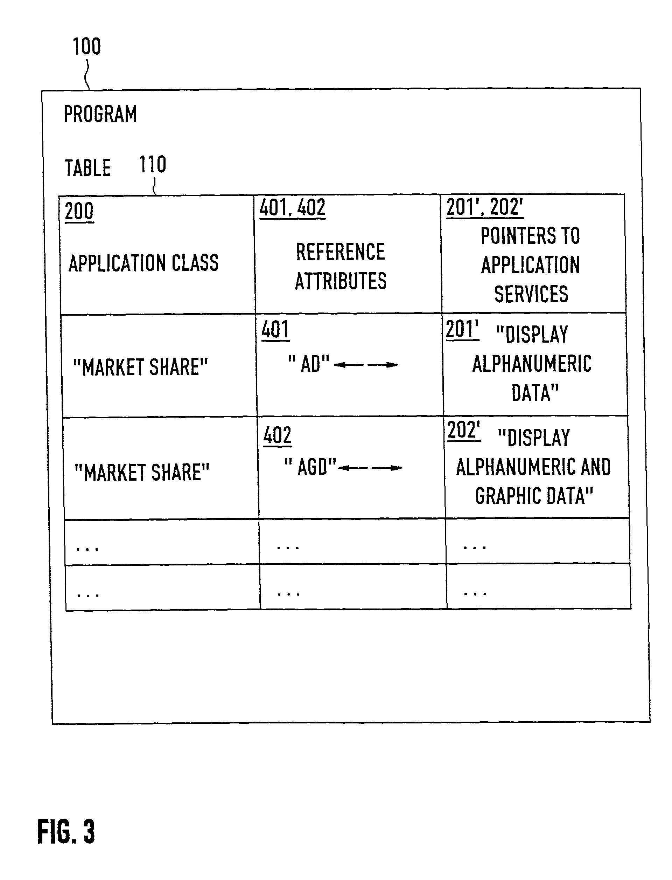

In server 900, memory 920 stores CPP 100 (cf. FIGS. 3-4) and application services 201 and 202 ("AS"). As used herein, the term "storing the application" services is intended to also include that memory 920 store pointers to the application services.

Services 201 and 202 belong to single predetermined application class 200 ("MARKET SHARE"). Services 201 and 202 are provided to serve client 901/902. In clients 901 and 902, memory 921 and memory 922 store device attribute 301 (e.g., alphanumeric device AD) and device attribute 302 (e.g., alphanumeric graphic device AGD), respectively. Device attributes 301 and 302 describe properties of output devices 951 and 952, respectively. Describing properties can also be accomplished by using a type identifier of client 901/902 for attribute 301/302. For example, the type identifier can be any expression with letters and numbers that the maker of client computer uses for marketing.

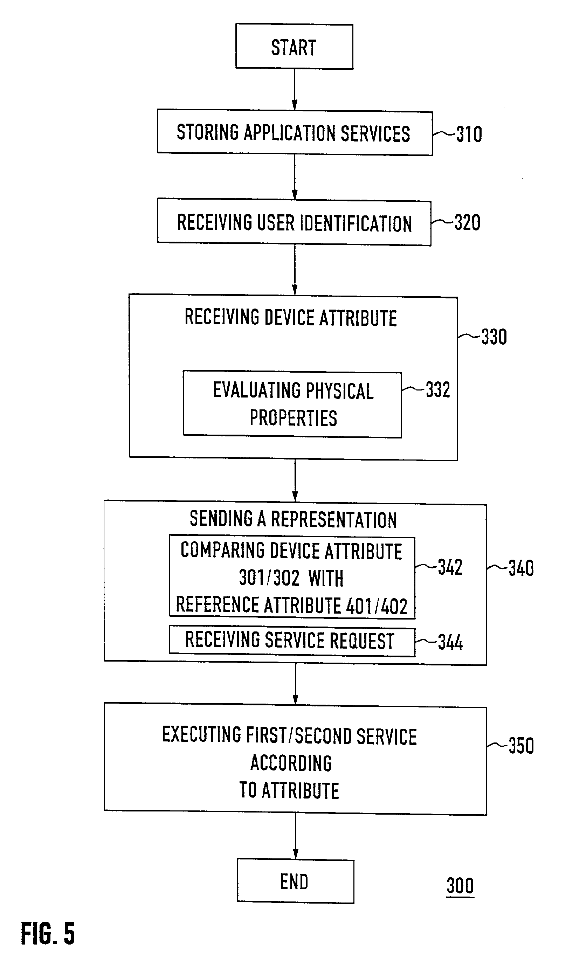

According to the present invention, server 100 operates as follows: Upon receiving user identification 1000 (cf. step 320 in FIG. 5), server 100 further receives (cf. 330) device attribute 301/302 from client 901/902, and selectively sends (cf. step 340) a representation (e.g., the headline in presentation 210/220) of application service 201/202 to client 901/902, according to device attribute 301/302.

As mentioned, application services 201 and 202 provide different data for different visual presentations 210 or 220 in client 901 or client 902, respectively. The choice of presentation depends on device type of client computer 901/902. For example, LCD-display 951 has the "AD" attribute and presents (210) alphanumeric symbols; while desktop display 952 has the "AGD" attribute and presents (220) alphanumeric symbols and graphics.

As details will be details below, server 900 sends representations of application services 201, 202, preferably, after comparing device attributes 301 and 302 with reference attributes (cf. FIG. 3, 401, 402).

Optionally, after receiving service request 190 from client 901/902, server 900 selectively executes application service 201 or 202 (i.e. service for that representation has been sent). In the example of FIG. 2, server executes the application by completing presentations 210, 220 with table and graphics, respectively.

Conveniently, server 900 receives device attributes 301 and 302 through tag 185 attached to network message 180 that client 901 or 902 communicates to server computer 900. Optionally, message 180 is a unified resource locator ("URL "http:// ... /AD" with tag "AD").

Persons of skill in art can modify the operation of server 100. For example, server 100 optionally monitors network 990 to receive device attribute 301/302 through evaluating physical signal transfer parameters in network 990. Parameters are, for example, data transfer rate, speed and like.

FIG. 3 illustrates CPP 100 of the present invention by a simplified memory diagram. FIG. 3 shows assignment table 110 that is, preferably, part of CPP 100. A first assignment is indicated by double-arrows.

Reference attributes 401, 402 are selectively assigned to application service 201 or to application service 202, respectively. It is not required that application service 201 and 202 reside in CPP 100; it is sufficient to provide pointers 201' and 202' in CPP 100. Hence, pointer 201' points to service 201 "DISPLAY ALPHANUMERIC DATA"; and pointer 202' points to service 202 "DISPLAY ALPHANUMERIC AND GRAPHIC DATA". Table 110 also shows that applications services 201 and 202 belong to the same application class 200.

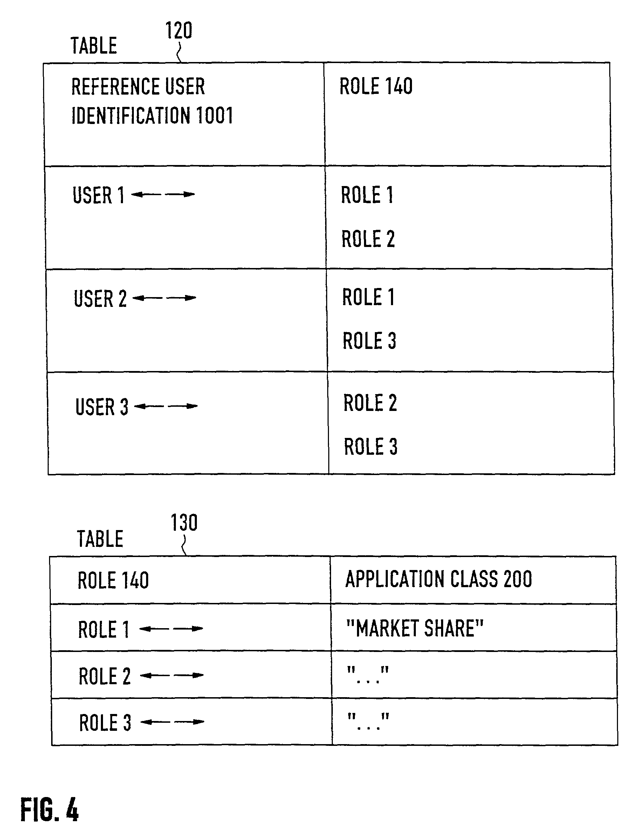

FIG. 4 illustrates an optional embodiment of CPP 100. Further assignment tables 120 and 130 are provided additionally to table 110. Assignments are again illustrated by double-arrows.

In a second assignment, table 120, reference user identification 1001 is assigned to role 140; in a third assignment, table 130, application class 200 is assigned to role 140.

In operation of computer 900, upon receiving user identification 1000 (cf. FIG. 2), role 140 and application class 200 are selected according to the second and third assignments, respectively. In example, 3 different human users USER 1, USER 2, and USER 3 have ROLES 1 and 2, ROLES 1 and 3, and ROLES 2 and 3, respectively. When USER 1 or USER 2 log on to either client 901 or 902, both can use the application class "MARKET SHARE" in ROLE 1. The user who communicates via client 901 is served by application 201 (presentation 210); the user who communicates via client 902 is served by application 202 (presentation 220). It is an advantage of the present invention, that all users can use appropriate service applications in an application class without being obstructed by further details.

FIG. 5 illustrates a simplified method flow chart diagram of method 300. Method 300 for communicating between client 901/902 and server 900 via network 990 is characterized by the following steps: 310 storing application services, 320 receiving user identification, 330 receiving device attribute (optionally with evaluating 332), 340 sending representation of service (preferably with comparing 342, receiving request 344), and - optionally - 350 executing services.

The steps are performed by server 900 as follows: For single predetermined application class 200, and for client 901/902, server 900 stores 310 at least first application service 201 and second application service 202 (or pointers 201', 202').

Server 900 receives 320 user identification 1000 and further receives 330 device attribute 301/302 from client 901/902. Server 900 selectively sends 340 representation of first application service 201 or of second application service 202 to client 901/902 according to device attribute 301/302.

Preferably, server 900 sends application services 201, 202 after comparing 342 device attribute 301/302 with reference attributes 401 and 402 (FIG. 3). Server 900 selectively executes 350 application service 201/202, preferably, after receiving service request 190 from client 901/902.

As mentioned, server 900 can optionally receive 330 device attribute 301/302 through evaluating 332 physical signal transfer parameters in network 990.

Having described the present invention, CPP 100 is summarized as follows: CPP 100 has program instructions for processor 910 in server 900 that is adapted to communicate with client 901/902 via network 990 and that receives user identification 1000 via client 901/902. Computer program product 100 is characterized in that the program instructions cause server 900 to execute the following: storing 310 for single predetermined application class 200, and for client 901/902, at least first application service 201 and second application service 202; upon receiving 320 user identification 1000, further receiving 330 device attribute 301/302 from client 901/902; and selectively sending 340 a representation of first 201 or second 202 application services to client 901/902 according to device attribute 301/302. Preferably, CPP 100 further causes server 900 to compare 342 device attribute 301/302 with reference attributes 401, 402. Preferably, CPP 100 further causes server to selectively execute 350 application service 201/202. Optionally, service execution 350 depends on reception of service request 190 from client 901/902; in other words, server 900 executes service 201/202 only the user desires this.

## Claims

1. A communication method (300) for a client computer (901/902) and a server computer (900) that communicate via a network (990), the server computer receiving a user identification (1000) via the client computer, the client computer selectively being a first device (901) or a second device (902),
the method (300) **characterized by** the following steps:
storing (310) in the server computer (900) for a single predetermined application class (200), and for the client computer (901/902), at least a first application service (201) and a second application service (202);
upon receiving (320) the user identification by the server computer (900), further receiving (330) a device attribute (301/302) from the client computer (901/902); and
selectively sending (340) a representation of the first application service (201) or of the second application service (202) from the server computer (900) to the client computer (901/902) according to the device attribute (301/302).

2. The method (300) of claim 1, wherein sending comprises comparing the device attribute (301/302) with reference attributes (401, 402).

3. The method (300) of claim 1, further comprising the step of selectively executing (350) the application service (201/202) for that a representation has been sent.

4. The method (300) of claim 3, wherein the executing step (350) depends on receiving a service request (190) from the client computer.

5. The method (300) of claim 1, wherein the first and second application services (201, 202) provide different data for different visual presentations in the client computer (901/902).

6. The method (300) of claim 1, **characterized by** receiving the device attribute (301/302) through evaluating (332) of physical signal transfer parameters in the network.

7. The method (300) of claim 2, wherein - in a first assignment - the reference attributes (401/402) are selectively assigned to the first application service (201) or to the second application service (202), and wherein the first assignment is stored in a predefined first assignment table (110).

8. The method (300) of claim 2, wherein - in a second assignment - a reference user identification (1001) is assigned to a role (140), wherein - in a third assignment - the predetermined application class is assigned to the role (140), wherein upon receiving the user identification, the role (140) and the application class are selected according to the second and third assignments, respectively.

9. A server computer (900) adapted to communicate with a client computer (901/902) via a network (990), the server computer receiving user identification (1000) via the client computer, the client computer selectively being a first device (901) or a second device (902), the server computer **characterized by**
storing (310) for a single predetermined application class (200), and for the client computer, at least a first application service (201) and a second application service (202),
upon receiving (320) the user identification, further receiving (330) a device attribute (301/302) from the client computer (901/902), and
selectively sending (340) a representation (210, 220) of the first application service (201) or the second application service (202) to the client computer according to the device attribute (301/302).

10. The server computer (900) of claim 9, **characterized in that** the server computer (900) compares (342) the device attribute (301/302) with reference attributes (401, 402) to select the application service for sending (340).

11. The server computer (900) of claim 9, **characterized in that** the server computer (900) selectively executes (350) the selected application service (201/202).

12. The server computer (900) of claim 11, wherein the executing (350) step depends on receiving a service request (190) from the client computer (901/902).

13. The server computer (900) of claim 9, **characterized by** receiving (330) the device attribute (301/302) through a tag (185) attached to a message (180) that the client computer communicates to the server computer.

14. The server computer (900) of claim 9, wherein the message is a unified resource locator (URL).

15. The server computer (900) of claim 9, wherein the first and second application services (201/202) provide different data for different visual presentations (210/220) in the client computer depending on the device of the client computer (901/902).

16. The server computer (900) of claim 9, wherein the device attribute describes properties of an output device of the client computer (901/902).

17. The server computer (900) of claim 16, wherein the device attribute (301/302) is a type identifier of the client computer.

18. The server computer (900) of claim 9, **characterized in that** the server computer receives (330) the device attribute through evaluating (332) physical signal transfer parameters in the network.

19. The server computer (900) of claim 10, **characterized in that** - in a first assignment - the server computer (900) stores the reference attributes (401/402) that are selectively assigned to the first application service (201) or to the second application service (202).

20. The server computer (900) of claim 19, **characterized in that** the server computer stores the first assignment in a predefined first assignment table (110).

21. The server computer (900) of claim 20, **characterized in that** - in a second assignment - a reference user identification (1001) is assigned to a role (140), wherein - in a third assignment - the predetermined application class is assigned to the role, wherein upon receiving the user identification, the role and the application class are selected according to the second and third assignments, respectively.

22. A computer program product (100) with program instructions for a processor (910) in a server computer (900), the server computer adapted to communicate with a client computer (901/902) via a network (990), the server computer receiving a user identification (1000) via the client computer, the client computer selectively being a first device (901) or a second device (902),
the computer program product **characterized in that** the program instructions cause the server computer (900) to execute the following:
storing (310) for a single predetermined application class (200), and for the client computer, at least a first application service (201) and a second application service (202) ;
upon receiving (320) the user identification, further receiving (330) a device attribute (301/302) from the client computer; and
selectively sending (340) a representation of the first application service (201) or the second application service (202)) to the client computer (901/902) according to the device attribute.

23. The computer program product (100) of claim 22, wherein the program instructions further cause the server computer to compare (342) the device attribute with reference attributes (401, 402).

24. The computer program product (100) of claim 22, wherein the program instructions further cause the server computer to selectively execute (350) the application service.

25. The computer program product (100) of claim 22, wherein the program instructions further cause the server computer to execute (350) the application service depending on the reception of a service request (190) from the client computer.

26. The computer program product (100) of claim 22, wherein the program instructions further cause the server computer to receive (330) the device attribute (301/302) through a tag (185) attached to a message (180) that the client computer communicates to the server computer.

27. The computer program product (100) of claim 22, wherein the program instructions further cause the server computer, while performing the first and second application services (201, 202), to provide different data for different visual presentations (210, 220) in the client computer.

28. The computer program product (100) of claim 23, wherein the program instructions further cause the server computer to selectively assign in a first assignment the reference attributes to the first application service or to the second application service.

29. The computer program product (100) of claim 2, wherein the program instructions further cause the server computer to store the first assignment in a predefined first assignment table (110).

30. The computer program product (100) of claim 29, wherein the program instructions further cause the server computer to assign a reference user identification (1001) to a role (140) in a second assignment, and to assign the predetermined application class (200) to the role in a third assignment, and, upon receiving the user identification (1000), to select the role and the application class according to the second and third assignments, respectively.

31. An article of manufacture (970) with a computer usable medium having computer readable program instructions embodied therein for communicating between a client computer and a server computer over a network, wherein the server computer receives a user identification (1000) via the client computer, and wherein the client computer is selectively a first device (901) or a second device (902), the program instructions causing the server computer to execute the following:
storing (310) for a single predetermined application class (200), and for the client computer, at least a first application service (201) and a second application service (202);
upon receiving (320) the user identification, further receiving (330) a device attribute (301/302) from the client computer; and
selectively sending (340) a representation of the first application service (201) or the second application service (202)) to the client computer (901/902) according to the device attribute.

32. A signal (980) that embodies computer readable program instructions for communicating between a client computer and a server computer over a network, wherein the server computer receives a user identification (1000) via the client computer, and wherein the client computer is selectively a first device (901) or a second device (902), the program instructions causing the server computer to execute the following:
storing (310) for a single predetermined application class (200), and for the client computer, at least a first application service (201) and a second application service (202);
upon receiving (320) the user identification, further receiving (330) a device attribute (301/302) from the client computer; and
selectively sending (340) a representation of the first application service (201) or the second application service (202)) to the client computer (901/902) according to the device attribute.
